# EUROPEAN PATENT APPLICATION

(11) **EP 3 373 221 A1**
(43) Date of publication of application: **12.09.2018**
(21) Application number: 16869908.0
(22) Date of filing: 24.11.2016
(51) Int. Cl.: G06Q 20/10

(54) **RESOURCE PROCESSING METHOD AND DEVICE**

(30) Priority: 04.12.2015 CN 201510886211
(71) Applicant: Alibaba Group Holding Limited, Grand Cayman (KY)
(72) Inventor: WANG, Wenqing, Hangzhou, Zhejiang 311121 (CN); CHEN, Kai, Hangzhou, Zhejiang 311121 (CN); MA, Yinghan, Hangzhou, Zhejiang 311121 (CN)
(74) Representative: Branderhorst, Matthijs Pieter Arie
(86) International application number: PCT/CN2016/107015
(87) International publication number: WO 2017/092598

(57) **Abstract**

The present application discloses a resource processing method and apparatus. The method comprises: receiving authentication information and business resource quantity information sent by a terminal, wherein the authentication information has an association relationship with a first account and the terminal is bundled with a second account; determining, according to the pre-established association relationship between the authentication information and the first account, the first account corresponding to the authentication information; acquiring, according to the business resource quantity information and from business resources of the first account, business resources corresponding to the business resource quantity information and forwarding the acquired business resources to the second account. By using the method, a first user does not need to carry a terminal device, but just needs to input authentication information that has an association relationship with the first user's own first account and corresponding business resource quantity information into a terminal that is bundled with a second account. Then, the first user can transfer a corresponding quantity of business resources to the second account. In this manner, it becomes much more convenient to transfer business resources between different users.

## Description

The present application claims priority to Chinese Patent Application No. 201510886211.4, filed on December 4, 2015 and entitled "Resource Processing Method and Apparatus," which is incorporated herein by reference in its entirety.

### Technical Field

The present application relates to the field of computer technologies, and in particular, to resource processing methods and apparatuses.

### Background

Along with the development of information technologies, a user not only can obtain corresponding business services from an online platform of a service provider, but also can obtain corresponding business services directly from other users.

In current technologies, a process of business operations executed between users can typically be completed with the support of Near Field Communication (NFC) or 2D barcode technologies. For example, a demand-side user (also referred to as a first user) can use a terminal to send, by means of NFC or scanning a 2D barcode, business resources in the first user's own account into an account of a supply-side user (also referred to as a second user). Then, the first user can acquire a desired business service provided by the second user.

However, a terminal is always used as a medium in the above process according to the current technologies. In other words, the first user needs to use a terminal for a communication or code-scanning operation every time when a business service provided by another second user is acquired, so as to send business resources. Once the user is away from the terminal, it would be impossible to send business resources.

### Summary

Embodiments of the present application provide resource processing methods and apparatuses to solve the problem that the procedure of the current technologies to process business resources is complicated.

A resource processing method according to an embodiment of the present application comprises: receiving authentication information and business resource quantity information sent by a terminal, wherein the authentication information has an association relationship with a first account and the terminal is bundled with a second account; determining, according to the pre-established association relationship between the authentication information and the first account, the first account corresponding to the authentication information; acquiring, according to the business resource quantity information and from business resources of the first account, business resources corresponding to the business resource quantity information and forwarding the acquired business resources to the second account.

Another resource processing method according to an embodiment of the present application comprises: sending, by a terminal, authentication information and business resource quantity information to a server, to cause the server to determine, according to a pre-established association relationship between the authentication information and a first account, the first account corresponding to the authentication information; receiving, by the terminal through a bundled second account, business resources sent by the server and corresponding to the business resource quantity information, wherein the business resources are acquired by the server from business resources of the first account according to the business resource quantity information.

Another resource processing method according to an embodiment of the present application comprises: receiving, by a terminal, a request for generating authentication information; sending the request for generating authentication information to a server, to cause the server to generate unique authentication information according to the request for generating authentication information, and establish an association relationship between the authentication information and a first account, wherein the association relationship between the authentication information and the first account is used to cause the server to determine, according to authentication information sent by the terminal bundled with a second account, the first account corresponding to the authentication information, and to acquire a specified quantity of business resources from business resources of the determined first account.

Another resource processing method according to an embodiment of the present application comprises: receiving fund authentication information and amount information sent by a terminal, wherein the fund authentication information has an association relationship with a first account and the terminal is bundled with a second account; determining, according to the pre-established association relationship between the fund authentication information and the first account, the first account corresponding to the fund authentication information; acquiring, according to the amount information and from the funds of the first account, funds corresponding to the amount information and forwarding the acquired funds to the second account.

Another resource processing method according to an embodiment of the present application comprises: receiving fund authentication information and amount information sent by a terminal, wherein the fund authentication information has an association relationship with a first account and the terminal is bundled with a second account; determining, according to the pre-established association relationship between the fund authentication information and the first account, the first account corresponding to the fund authentication information; determining whether the fund amount corresponding to the amount information exceeds the fund amount of the first account; if yes, determining credit funds corresponding to the first account, acquiring funds corresponding to the amount information from the credit funds, and forwarding the acquired funds to the second account, or acquiring funds corresponding to the amount information from the funds of the first account and the determined credit funds of the first account, and forwarding the acquired funds to the second account; otherwise, acquiring funds corresponding to the amount information from the funds of the first account, and forwarding the acquired funds to the second account.

Another resource processing method according to an embodiment of the present application comprises: sending, by a terminal, fund authentication information and amount information to a server, to cause the server to determine, according to a pre-established association relationship between the fund authentication information and a first account, the first account corresponding to the fund authentication information; receiving, by the terminal through a bundled second account, funds sent by the server and corresponding to the amount information, wherein the funds are acquired by the server from the funds of the first account according to the amount information.

Another resource processing method according to an embodiment of the present application comprises: receiving, by a terminal, a request for generating fund authentication information; sending the request for generating fund authentication information to a server, to cause the server to generate unique fund authentication information according to the request for generating fund authentication information, and establish an association relationship between the fund authentication information and the first account, wherein the association relationship between the fund authentication information and the first account is used to cause the server to determine, according to the fund authentication information sent by the terminal bundled with a second account, a first account corresponding to the fund authentication information, and to acquire a specified amount of funds from the funds of the first account.

A resource processing apparatus according to an embodiment of the present application comprises: a receiving module configured to receive authentication information and business resource quantity information sent by a terminal, wherein the authentication information has an association relationship with a first account and the terminal is bundled with a second account; a determining module configured to determine, according to the pre-established association relationship between the authentication information and the first account, the first account corresponding to the authentication information; a processing module configured to acquire, according to the business resource quantity information and from business resources of the first account, business resources corresponding to the business resource quantity information, and to forward the acquired business resources to the second account.

Another resource processing apparatus according to an embodiment of the present application comprises: a sending module configured to send authentication information and business resource quantity information to a server, to cause the server to determine, according to a pre-established association relationship between the authentication information and a first account, the first account corresponding to the authentication information; a receiving module configured to receive, through a second account bundled with the terminal, business resources sent by the server and corresponding to the business resource quantity information, wherein the business resources are acquired by the server from business resources of the first account according to the business resource quantity information.

Another resource processing apparatus according to an embodiment of the present application comprises: a receiving module configured to receive a request for generating authentication information; a sending module configured to send the request for generating authentication information to a server, to cause the server to generate unique authentication information according to the request for generating authentication information, and establish an association relationship between the authentication information and a first account, wherein the association relationship between the authentication information and the first account is used to cause the server to determine, according to authentication information sent by the terminal bundled with a second account, the first account corresponding to the authentication information, and to acquire a specified quantity of business resources from business resources of the determined first account.

Another resource processing apparatus according to an embodiment of the present application comprises: a receiving module configured to receive fund authentication information and amount information sent by a terminal, wherein the fund authentication information has an association relationship with a first account and the terminal is bundled with a second account; a determining module configured to determine, according to the pre-established association relationship between the fund authentication information and the first account, the first account corresponding to the fund authentication information; a processing module configured to acquire, according to the amount information and from the funds of the first account, funds corresponding to the amount information, and to forward the acquired funds to the second account.

Another resource processing apparatus according to an embodiment of the present application comprises: a receiving module configured to receive fund authentication information and amount information sent by a terminal, wherein the fund authentication information has an association relationship with a first account and the terminal is bundled with a second account; a determining module configured to determine, according to the pre-established association relationship between the fund authentication information and the first account, the first account corresponding to the fund authentication information; a processing module configured to determine whether the fund amount corresponding to the amount information exceeds the fund amount of the first account; if yes, determine credit funds corresponding to the first account, acquire funds corresponding to the amount information from the credit funds, and forward the acquired funds to the second account, or acquire funds corresponding to the amount information from the funds of the first account and the determined credit funds of the first account, and forward the acquired funds to the second account; otherwise, acquire funds corresponding to the amount information from the funds of the first account, and forward the acquired funds to the second account.

Another resource processing apparatus according to an embodiment of the present application comprises: a sending module configured to send fund authentication information and amount information to a server, to cause the server to determine, according to a pre-established association relationship between the fund authentication information and a first account, the first account corresponding to the fund authentication information; a receiving module configured to receive, through a second account bundled with the terminal, funds sent by the server and corresponding to the amount information, wherein the funds are acquired by the server from the funds of the first account according to the amount information.

Another resource processing apparatus according to an embodiment of the present application comprises: a receiving module configured to receive a request for generating fund authentication information; a sending module configured to send the request for generating fund authentication information to a server, to cause the server to generate unique fund authentication information according to the request for generating fund authentication information, and establish an association relationship between the fund authentication information and the first account, wherein the association relationship between the fund authentication information and the first account is used to cause the server to determine, according to the fund authentication information sent by the terminal bundled with a second account, a first account corresponding to the fund authentication information, and to acquire a specified amount of funds from the funds of the first account.

The embodiments of the present application provide resource processing methods and apparatuses. According to the method, in an application scenario, a first user does not need to carry a terminal device in a process that the first user acquires a business service from a second user, but just needs to use a terminal that is used by the second user and bundled with the second user's own second account. By inputting authentication information that has an association relationship with the first user's own first account and corresponding business resource quantity information, a corresponding quantity of business resources can be transferred to the second user's second account. In this manner, it becomes much more convenient to transfer business resources between different users.

### Brief Description of the Drawings

The accompanying drawings described herein are used to provide a further understanding of the present application and constitute a part of the present application. Exemplary embodiments of the present application and the description thereof are used to describe the present application and shall not constitute an improper limitation to the present application. In the accompanying drawings,
FIG. 1 is a flow chart of a resource processing procedure according to an embodiment of the present application;
FIG. 2 is another flow chart of a resource processing procedure according to an embodiment of the present application;
FIG. 3 is yet another flow chart of a resource processing procedure according to an embodiment of the present application;
FIG. 4 is a flow chart of a resource processing procedure in a practical application scenario according to an embodiment of the present application;
FIG. 5 is another flow chart of a resource processing procedure in a practical application scenario according to an embodiment of the present application;
FIG. 6 is yet another flow chart of a resource processing procedure in a practical application scenario according to an embodiment of the present application;
FIG. 7 is yet another flow chart of a resource processing procedure in a practical application scenario according to an embodiment of the present application;
FIG. 8 is a schematic structural diagram of a resource processing apparatus according to an embodiment of the present application;
FIG. 9 is another schematic structural diagram of a resource processing apparatus according to an embodiment of the present application;
FIG. 10 is yet another schematic structural diagram of a resource processing apparatus according to an embodiment of the present application;
FIG. 11 is a schematic structural diagram of a resource processing apparatus in a practical application scenario according to an embodiment of the present application;
FIG. 12 is another schematic structural diagram of a resource processing apparatus in a practical application scenario according to an embodiment of the present application;
FIG. 13 is yet another schematic structural diagram of a resource processing apparatus in a practical application scenario according to an embodiment of the present application;
FIG. 14 is yet another schematic structural diagram of a resource processing apparatus in a practical application scenario according to an embodiment of the present application.

### Detailed Description

To make the objectives, technical solutions, and advantages of the present application clearer, the technical solutions of the present application will be clearly and completely described below with reference to specific embodiments of the present application and the accompanying drawings. Apparently, the described embodiments are merely some, rather than all, of the embodiments of the present application. All other embodiments obtainable by a person skilled in the art on the basis of the embodiments of the present application and without inventive effort shall fall within the scope of the present application.

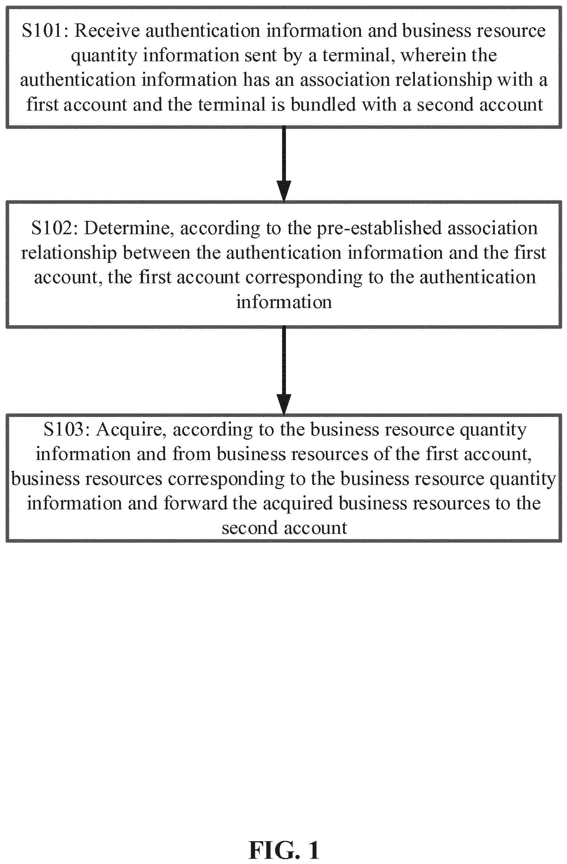

As shown in FIG. 1, a resource processing method according to an embodiment of the present application comprises the following steps:
S101: receiving authentication information and business resource quantity information sent by a terminal.

Here, the authentication information has an association relationship with a first account, and the terminal is bundled with a second account.

In an embodiment of the present application, the terminal may be a mobile terminal or a computer terminal, the first account may be an account of a first user (i.e., the demand-side user above), and correspondingly, the second account may be an account of a second user (i.e., the supply-side user above). The authentication information can be authentication information of business resources in an account, and can be, for example, a character string comprising letters, numbers, or signs. The business resource quantity information reflects a quantity of business resources to be transferred from the first account to the second account. When a corresponding quantity of business resources has been transferred from the first account to the second account, the first user can acquire a business service provided by the second user.

For example, the business resources in an embodiment of the present application can be various resources capable of being transferred and exchanged between different accounts, such as a data file belonging to an account and saved on an online drive, personnel grouping information and funds belonging to a personnel management account, and the like.

In an application scenario according to an embodiment of the present application, with respect to the step S 101 above, it can be regarded that the first user inputs the authentication information and business resource quantity information into the terminal bundled with the second account.

S102: determining, according to the pre-established association relationship between the authentication information and the first account, the first account corresponding to the authentication information.

Since the authentication information is authentication information of business resources in an account, the authentication information is associated with business resources in a corresponding account (the first account). Then, an account having an association relationship with the authentication information can be determined through the authentication information. Just like in the embodiment of the present application, a first account having an association relationship with the authentication information can be determined through the authentication information.

It should be noted that any account can be determined through corresponding authentication information, and consequently, one piece of authentication information uniquely corresponds to one account. Namely, the authentication information is unique.

S103: acquiring, according to the business resource quantity information and from business resources of the first account, business resources corresponding to the business resource quantity information and forwarding the acquired business resources to the second account.

As described above, the business resource quantity information reflects a quantity of business resources required for obtaining a business service, while an account typically includes corresponding business resources. When a corresponding account is determined according to authentication information, a corresponding quantity of business resources can be acquired from the account. In other words, in an application scenario of an embodiment of the present application, a quantity of business resources to be used by the first user can be determined according to the business resource quantity information, the corresponding quantity of business resources can be acquired from the business resources of the first account, and the acquired business resources can be forwarded to the second account.

It should be noted that the above process in the embodiment of the present application can be executed by a server in a back-end service system of a service provider (including but not limited to a website, a bank, a telecommunication operator, and the like). Namely, the first user and the second user both register their respective accounts (i.e., the first account and the second account) in the service system, which does not constitute a limitation to the present application.

Apparently, the above steps are different from the prior art in that, in an application scenario, a first user does not need to carry a terminal device in a process that the first user acquires a business service from a second user, but just needs to use a terminal that is used by the second user and bundled with the second user's own second account. By inputting authentication information that has an association relationship with the first user's own first account and corresponding business resource quantity information, a corresponding quantity of business resources can be transferred to the second user's second account. In this manner, it becomes much more convenient to transfer business resources between different users.

As described above, in a process that the first user acquires a business service from the second user, the first user just needs to input authentication information into a terminal bundled with the second account, and then the server can uniquely determine the first account according to the authentication information and acquire corresponding business resources from the business resources of the first account. In other words, a one-to-one association relationship between the authentication information and the first account has been established in advance, and the one-to-one association relationship ensures that the server can only determine a first account, not any other account, according to the authentication information.

In an embodiment of the present application, the pre-establishing the association relationship between authentication information and first accounts comprises: receiving a request for generating authentication information sent by a first account, generating unique authentication information according to the received request for generating authentication information, and establishing an association relationship between the generated authentication information and the first account.

In one example, in a practical application scenario, a first user can send a request via its first account in advance to request a server to generate globally unique authentication information. When the server generates the authentication information, an association relationship with the first account is established. Then, the first user can directly use the authentication information.

In addition to the above manner in which the authentication information is generated by a server, the authentication information can also be independently set by a user as a manner in the embodiments of the present application. It is possible that different users set identical authentication information. To prevent this situation from occurring, a server can check the uniqueness of authentication information independently set by a user. For example, a user A independently sets authentication information to be a character string of "aaa." A server checks the uniqueness of the character string of "aaa." When no character string is found to be the same as "aaa," the server can determine the character string of "aaa" as authentication information associated with the user A's account. No limitation is imposed here to the present application.

In a practical application, moreover, there is a risk of leakage for authentication information if a user uses the authentication information in a process of acquiring a business service from another user. To avoid or lower the risk of leakage after authentication information is used, the method in an embodiment of the present application further comprises: starting timing when generating the authentication information, and when the timed length reaches a preset length, dissolving the association relationship between the authentication information and the first account.

In other words, authentication information has a period of validity. Namely, authentication information becomes invalid after a preset length of time. In an embodiment of the present application, the preset length can be 12 hours, 24 hours, and the like, which can be set according to actual needs and is not a limitation to the present application.

In a practical application, moreover, it is possible that the quantity of business resources corresponding to the business resource quantity information exceeds the quantity of business resources of a user's own account in a process that the user acquires a business service from another user. In such a case, the process of acquiring a business service may fail, while a service provider may provide a kind of additional business resources for various accounts. In an embodiment of the present application, the additional business resources can be referred to as extra resources. As such, even when the quantity of business resources in a user's account are smaller than the quantity of business resources corresponding to the business resource quantity information, the server can acquire business resources from the account's extra resources such that the user completes the process of acquiring a business service.

Based on this, the acquiring, according to the business resource quantity information and from business resources of the first account, business resources corresponding to the business resource quantity information comprises: determining whether the quantity of business resources corresponding to the business resource quantity information exceeds the quantity of business resources of the first account; if yes, determining extra resources corresponding to the first account, and acquiring business resources corresponding to the business resource quantity information from the extra resources, or acquiring business resources corresponding to the business resource quantity information from the business resources of the first account and the determined extra resources; otherwise, acquiring business resources corresponding to the business resource quantity information from the business resources of the first account.

In one example, in the case where the quantity of business resources corresponding to the business resource quantity information exceeds the quantity of business resources of the first account, there are two manners in which a server acquires business resources: the first manner is that the server acquires business resources corresponding to the business resource quantity information from the extra resources corresponding to the first account; the second manner is that the server first acquires all business resources of the first account, and then acquires the remaining business resources from the extra resources corresponding to the first account, such that the quantity of acquired business resources is equal to the quantity of business resources corresponding to the business resource quantity information.

If the quantity of business resources corresponding to the business resource quantity information does not exceed the quantity of business resources of the first account, a corresponding quantity of business resources can be directly acquired from the business resources of the first account.

For example, assuming that the quantity of business resources in the first account A' of a user A is 2, a server assigns 10 units of extra resources to the first account A'. At the same time, assuming that the quantity of business resources corresponding to the business resource quantity information is 5 in a process that the user A acquires a business service from another user, when the user A inputs the authentication information and business resource quantity information on a terminal of another user, the server would first acquire 2 units of business resources in the first account A', and then acquire 3 units of business resources from the extra resources of the first account A', such that the quantity of acquired business resources is 5. Alternatively, the server can directly acquire 5 units of business resources from the extra resources of the first account A'.

In the case where the quantity of business resources in the first account A' is not lower than the quantity of business resources corresponding to the business resource quantity information, the server can acquire business resources directly from the business resources of the first account A', which will not be described through an example herein.

In a practical application, extra resources corresponding to a first account are typically related to the level of the account. In other words, a service provider would typically assign different quantities of extra resources to accounts at different levels. Therefore, the determining extra resources corresponding to the first account comprises: determining an account level of the first account, and determining extra resources corresponding to the first account according to preset correspondence relationships between account levels and extra resources.

It should be noted that the extra resources in the embodiments of the present application are provided by a service provider, rather than business resources in a user's own account. It can be regarded that extra resources are a kind of credit resources. Therefore, when a user uses the extra resources, the user will return the used extra resources after a set period of time. As a manner in the embodiments of the present application, a service provider can deduct a corresponding quantity of business resources from a user's account after a set period of time. No limitation is imposed here to the present application.

In addition, it should be noted that, after the above process has been executed in a practical application scenario, the server does not forward the acquired business resources directly to a second account. Typically, the server would temporarily store the acquired business resources in a third-party account, generate detailed information corresponding to each process of acquiring business resources in the first account, and display the detailed information to the first user via the first account for confirmation by the first user. Namely, in an embodiment of the present application, prior to the forwarding to the second account, the method further comprises: receiving a confirmation instruction sent by the first account.

The reason for confirmation by the first user is to prevent another user from maliciously acquiring, after having learned authentication information of the first account of the first user, the business resources, of which the first user is not aware. By the confirmation instruction, the first user can effectively identify authentication information input by himself/herself each time. For a process in which the authentication information is not input by the first user himself/herself, the first user can send a denying instruction via the first account; upon receiving the denying instruction, the server will return the business resources acquired from the first account back to the first account.

As a manner in the embodiments of the present application, if the server does not receive a confirmation instruction sent by the first account within a set period of time, the server can forward the business resources temporarily stored in the third-party account to the second account. The set period of time here can be set according to actual needs to, for example, 7 days, 10 days, and the like, which does not constitute a limitation to the present application.

As a manner in the embodiments of the present application, moreover, to prevent the first user from maliciously sending a denying instruction via the first account, the second user can file corresponding certification information via the second account to the service provider to certify that the first user inputs the authentication information and business resource quantity information, which will be determined by the back-end service system of the service provider. No limitation is imposed here to the present application.

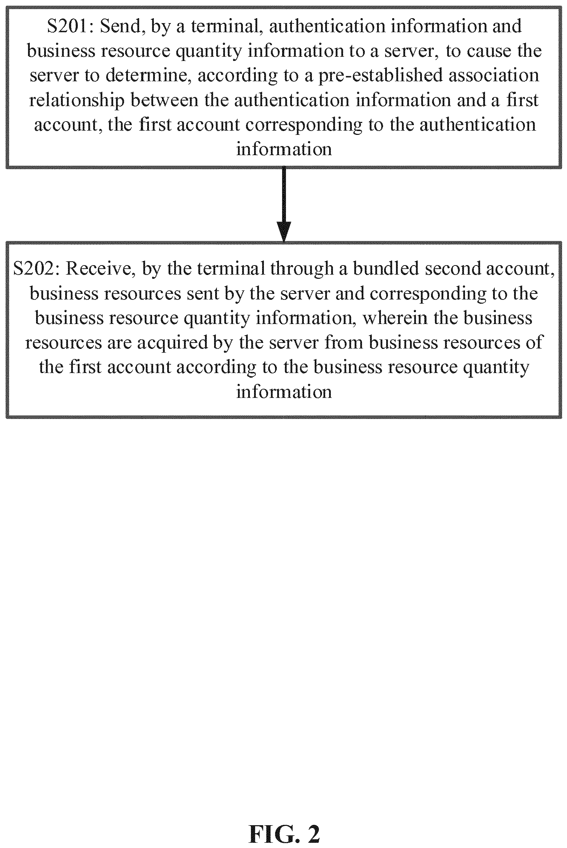

The description above is an execution process based on the server side. In a practical application, an embodiment of the present application further provides a resource processing procedure for a terminal side that sends the authentication information and business resource quantity information. As shown in FIG. 2, the method comprises the following steps:
S201: sending, by a terminal, authentication information and business resource quantity information to a server, to cause the server to determine, according to a pre-established association relationship between the authentication information and a first account, the first account corresponding to the authentication information.

Similar to the above embodiment, the terminal herein is a terminal bundled with a second account, and the authentication information has an association relationship with the first account. Therefore, it will not be repeated herein.

S202: receiving, by the terminal through a bundled second account, business resources sent by the server and corresponding to the business resource quantity information, wherein the business resources are acquired by the server from business resources of the first account according to the business resource quantity information.

After the terminal bundled with the second account sends the authentication information and business resource quantity information to the server, the server can determine a corresponding first account according to the authentication information, acquire business resources from the first account, and forward the business resources to the second account.

In a practical application scenario corresponding to the embodiment of the present application, therefore, a first user does not need to use his/her own terminal device in a process of transferring business services. Instead, the process of transferring business services can be completed by inputting the corresponding authentication information and business resource quantity information directly through the terminal bundled with the second account, which makes a process of transferring business services initiated by the user much more convenient.

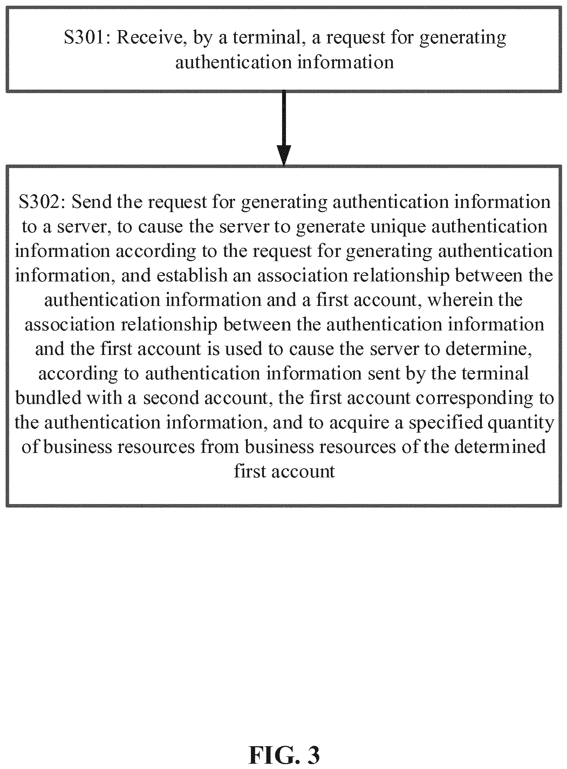

In addition, the authentication information in the embodiment of the present application is associated with the first account, and the generation of the first account is typically based on a corresponding operation sent by the first user in the first account. Therefore, a resource processing method is further provided according to an embodiment of the present application. As shown in FIG. 3, the method comprises the following steps:
S301: receiving, by a terminal, a request for generating authentication information.

The terminal herein is a terminal bundled with a first account, and the request for generating authentication information can be sent by the first user executing a corresponding operation on the terminal.

S302: sending the request for generating authentication information to a server, to cause the server to generate unique authentication information according to the request for generating authentication information, and establish an association relationship between the authentication information and the first account, wherein the association relationship between the authentication information and the first account is used to cause the server to determine, according to authentication information sent by the terminal bundled with a second account, the first account corresponding to the authentication information, and to acquire a specified quantity of business resources from business resources of the determined first account.

Upon receiving the request for generating authentication information, the server would generate corresponding authentication information and establish an association relationship with the first account. Namely, the first account can be uniquely determined with the authentication information, and then the server can further acquire a specified quantity of business resources from business resources of the determined first account. The specified quantity of business resources herein is the quantity of business resources corresponding to the business resource quantity information described above. The detailed process is just the same as the description above, which will not be repeated herein.

In addition, when the first user initiates an operation to transfer business resources into the second user's own second account, the server will send a confirmation to the first user's own first account for the first user to confirm. Therefore, in the embodiment of the present application, the method further comprises: the terminal receives a confirmation request sent by the server, generates a confirmation instruction according to an operation by the user for the confirmation request, and returns the confirmation instruction to the server, to cause the server to forward the acquired business resources to the second account according to the confirmation instruction.

In summary, a resource processing method that is different from the prior art is provided in the embodiment of the present application, such that a first user does not need to use or carry a terminal device in a process of transferring business services initiated by the user. Instead, a corresponding quantity of business services can be transferred to a second account by inputting the corresponding authentication information and business resource quantity information through a terminal used by a second user and bundled with the second account, which makes the process of transferring business services initiated by the user much more convenient.

The above description of the present application is also applicable to a service architecture of Customer to Customer (C2C) E-commerce in practical applications. To clearly describe the above resource processing procedure, a scenario in which business services are funds and the business resource quantity information is amount information will be described below.

In such a scenario, a first user can acquire a business service from a second user. At this moment, the first user needs to pay corresponding funds to the second user. In the case where the first user does not carry a terminal, the first user can use a terminal of the second user to complete the fund payment process.

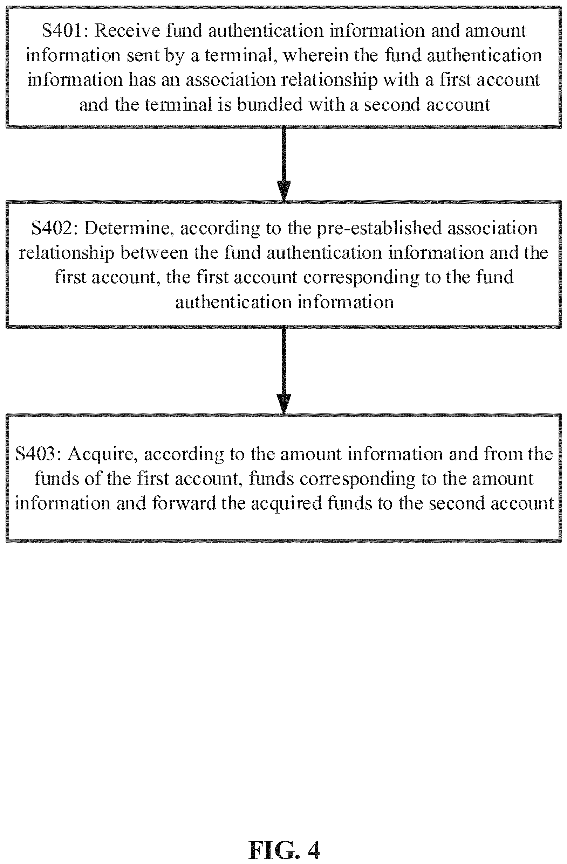

Based on this, a resource processing method is provided according to an embodiment of the present application. As shown in FIG. 4, the method comprises the following steps:
S401: receiving fund authentication information and amount information sent by a terminal, wherein the fund authentication information has an association relationship with a first account and the terminal is bundled with a second account.
S402: determining, according to the pre-established association relationship between the fund authentication information and the first account, the first account corresponding to the fund authentication information.
S403: acquiring, according to the amount information and from the funds of the first account, funds corresponding to the amount information and forwarding the acquired funds to the second account.

It can be seen that the first user can directly input the amount to be paid and the fund authentication information on the terminal of the second user (the terminal is bundled with the second user's own second account), and then the server can deduct, according to the fund authentication information, a corresponding amount of funds from the first user's own first account and pay the acquired funds to the second account. Apparently, such a manner can complete the payment operation in the case where the first user does not carry any terminal device, which makes the payment more convenient.

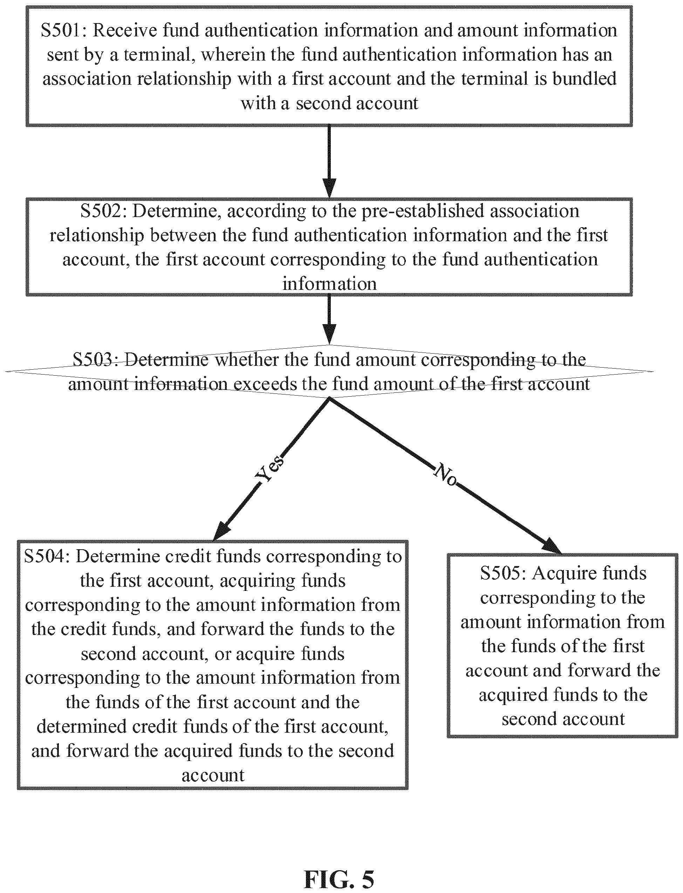

Correspondingly, a resource processing method is further provided according to an embodiment of the present application. As shown in FIG. 5, the method comprises the following steps:
S501: receiving fund authentication information and amount information sent by a terminal, wherein the fund authentication information has an association relationship with a first account and the terminal is bundled with a second account.
S502: determining, according to the pre-established association relationship between the fund authentication information and the first account, the first account corresponding to the fund authentication information.
S503: determining whether the fund amount corresponding to the amount information exceeds the fund amount of the first account; if yes, proceeding to step S504; otherwise, proceeding to step S505.
S504: determining credit funds corresponding to the first account, acquiring funds corresponding to the amount information from the credit funds, and forwarding the acquired funds to the second account, or acquiring funds corresponding to the amount information from the funds of the first account and the determined credit funds of the first account, and forwarding the acquired funds to the second account;
S505: acquiring funds corresponding to the amount information from the funds of the first account and forwarding the acquired funds to the second account.

In the embodiments of the present application, therefore, a service provider can provide a credit service to enable a user to complete a payment operation by using credit funds in the account thereof. Credit funds corresponding to an account are typically related to the level of the account. Namely, an account at a higher level has a higher amount of credit funds. The details are similar to the description above, which will not be repeated herein.

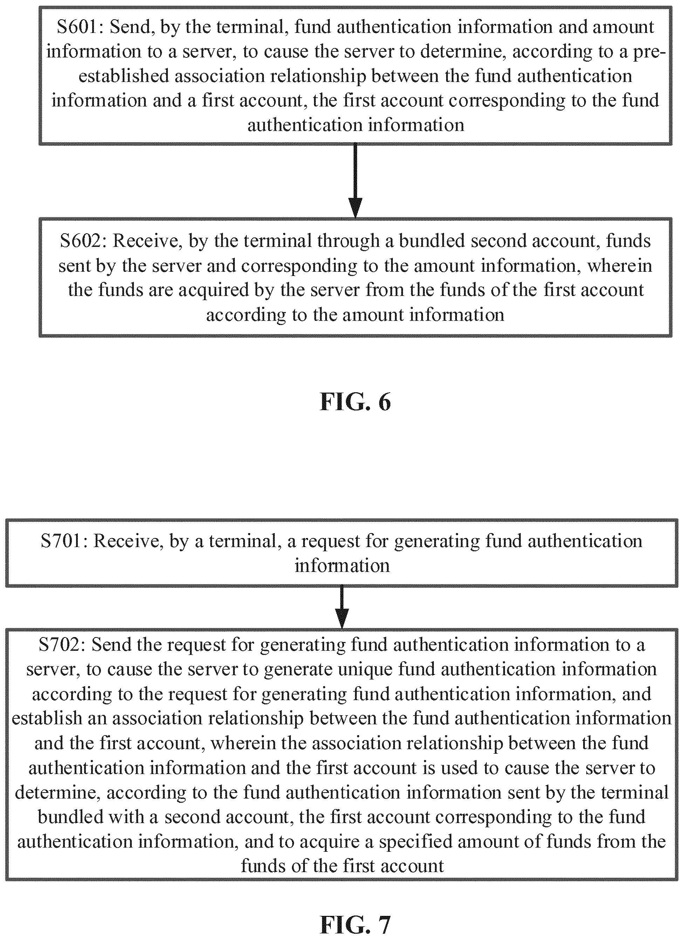

For the terminal used by the second user, a resource processing method is further provided according to an embodiment of the present application. As shown in FIG. 6, the method comprises the following steps:
S601: sending, by the terminal, fund authentication information and amount information to a server, to cause the server to determine, according to a pre-established association relationship between the fund authentication information and a first account, the first account corresponding to the fund authentication information.
S602: receiving, by the terminal through a bundled second account, funds sent by the server and corresponding to the amount information, wherein the funds are acquired by the server from the funds of the first account according to the amount information.

Correspondingly, for the terminal used by the first user, a resource processing method is further provided according to an embodiment of the present application. As shown in FIG. 7, the method comprises the following steps:
S701: receiving, by a terminal, a request for generating fund authentication information.
S702: sending the request for generating fund authentication information to a server, to cause the server to generate unique fund authentication information according to the request for generating fund authentication information, and establish an association relationship between the fund authentication information and the first account, wherein the association relationship between the fund authentication information and the first account is used to cause the server to determine, according to the fund authentication information sent by the terminal bundled with a second account, a first account corresponding to the fund authentication information, and to acquire a specified amount of funds from the funds of the first account.

In summary, by using the resource processing method according to the embodiment of the present application in a C2C service architecture, a first user does not need to use or carry a terminal device. Instead, the first user can directly use a terminal of a second user (the terminal is bundled with the second user's own second account) and complete a payment operation by inputting fund authentication information, which makes the payment operation more convenient.

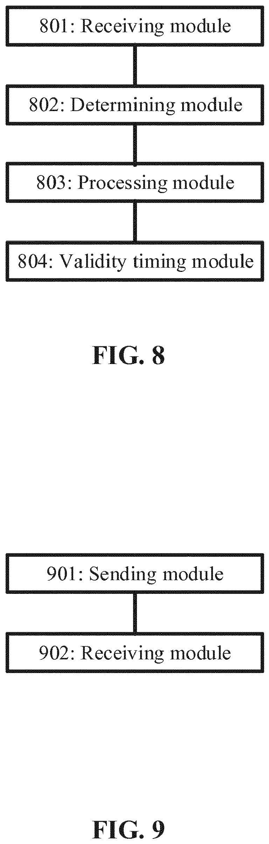

The resource processing methods according to the embodiments of the present application are described above. Based on the same concept, an embodiment of the present application further provides a resource processing apparatus. As shown in FIG. 8, the apparatus comprises: a receiving module 801 configured to receive authentication information and business resource quantity information sent by a terminal, wherein the authentication information has an association relationship with a first account and the terminal is bundled with a second account; a determining module 802 configured to determine, according to the pre-established association relationship between the authentication information and the first account, the first account corresponding to the authentication information; and a processing module 803 configured to acquire, according to the business resource quantity information and from business resources of the first account, business resources corresponding to the business resource quantity information, and to forward the acquired business resources to the second account.

In one example, the determining module 802 is configured to receive a request for generating authentication information sent by the first account, generate unique authentication information according to the received request for generating authentication information, and establish an association relationship between the generated authentication information and the first account.

Based on this, the above apparatus further comprises a validity timing module 804 configured to start timing when generating the authentication information, and when the timed length reaches a preset length, dissolve the association relationship between the authentication information and the first account.

In some embodiments, the processing module 803 is, for example, configured to determine whether the quantity of business resources corresponding to the business resource quantity information exceeds the quantity of business resources of the first account; if yes, determine extra resources corresponding to the first account, and acquire business resources corresponding to the business resource quantity information from the extra resources, or acquire business resources corresponding to the business resource quantity information from the business resources of the first account and the determined extra resources; otherwise, acquire business resources corresponding to the business resource quantity information from the business resources of the first account.

In another example, the processing module 803 is configured to determine an account level of the first account, and determine extra resources corresponding to the first account according to preset correspondence relationships between account levels and extra resources.

In addition, prior to the forwarding to the second account, the receiving module 801 is further configured to receive a confirmation instruction sent by the first account.

Embodiments of the present application further provide a resource processing apparatus. As shown in FIG. 9, the apparatus comprises: a sending module 901 configured to send authentication information and business resource quantity information to a server, to cause the server to determine, according to a pre-established association relationship between the authentication information and the first account, the first account corresponding to the authentication information; and a receiving module 902 configured to receive, through a second account bundled with the terminal, business resources sent by the server and corresponding to the business resource quantity information, wherein the business resources are acquired by the server from business resources of the first account according to the business resource quantity information.

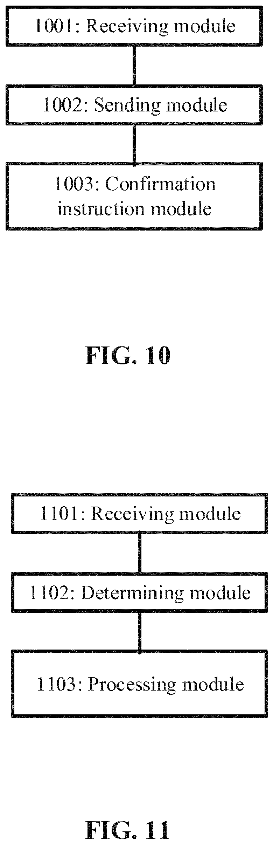

An embodiment of the present application further provides a resource processing apparatus. As shown in FIG. 10, the apparatus comprises: a receiving module 1001 configured to receive a request for generating authentication information; and a sending module 1002 configured to send the request for generating authentication information to a server, to cause the server to generate unique authentication information according to the request for generating authentication information, and establish an association relationship between the authentication information and a first account, wherein the association relationship between the authentication information and the first account is used to cause the server to determine, according to authentication information sent by the terminal bundled with a second account, a first account corresponding to the authentication information, and to acquire a specified quantity of business resources from business resources of the determined first account.

Based on this, the above apparatus further comprises a confirmation instruction module 1003 configured to receive a confirmation request sent by the server, generate a confirmation instruction according to an operation by the user for the confirmation request, and return the confirmation instruction to the server, to cause the server to forward the acquired business resources to the second account according to the confirmation instruction.

In a scenario based on a C2C service architecture, an embodiment of the present application further provides a resource processing apparatus. As shown in FIG. 11, the apparatus comprises: a receiving module 1101 configured to receive fund authentication information and amount information sent by a terminal, wherein the fund authentication information has an association relationship with a first account and the terminal is bundled with a second account; a determining module 1102 configured to determine, according to the pre-established association relationship between the fund authentication information and the first account, the first account corresponding to the fund authentication information; and a processing module 1103 configured to acquire, according to the amount information and from the funds of the first account, funds corresponding to the amount information, and to forward the funds to the second account.

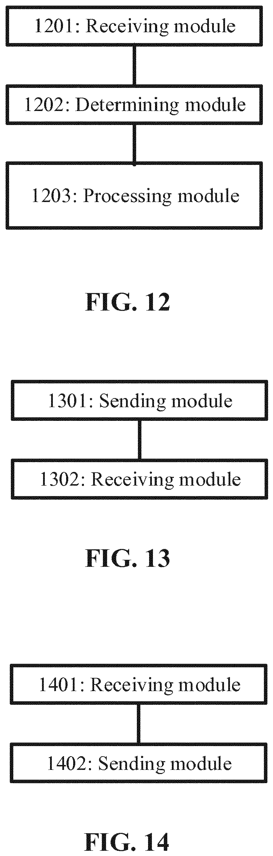

As shown in FIG. 12, an embodiment of the present application further provides a resource processing apparatus, comprising: a receiving module 1201 configured to receive fund authentication information and amount information sent by a terminal, wherein the fund authentication information has an association relationship with a first account and the terminal is bundled with a second account; a determining module 1202 configured to determine, according to the pre-established association relationship between the fund authentication information and the first account, the first account corresponding to the fund authentication information; and a processing module 1203 configured to determine whether the fund amount corresponding to the amount information exceeds the fund amount of the first account; if yes, determine credit funds corresponding to the first account, acquire funds corresponding to the amount information from the credit funds, and forward the funds to the second account, or acquire funds corresponding to the amount information from the funds of the first account and the determined credit funds of the first account, and forward the funds to the second account; otherwise, acquire funds corresponding to the amount information from the funds of the first account, and forward the funds to the second account.

As shown in FIG. 13, embodiments of the present application further provide a resource processing apparatus, comprising: a sending module 1301 configured to send fund authentication information and amount information to a server, to cause the server to determine, according to a pre-established association relationship between the fund authentication information and a first account, the first account corresponding to the fund authentication information; and a receiving module 1302 configured to receive, through a second account bundled with the terminal, funds sent by the server and corresponding to the amount information, wherein the funds are acquired by the server from the funds of the first account according to the amount information.

As shown in FIG. 14, an embodiment of the present application further provides a resource processing apparatus, comprising: a receiving module 1401 configured to receive a request for generating fund authentication information; and a sending module 1402 configured to send the request for generating fund authentication information to a server, to cause the server to generate unique fund authentication information according to the request for generating fund authentication information, and establish an association relationship between the fund authentication information and the first account, wherein the association relationship between the fund authentication information and the first account is used to cause the server to determine, according to the fund authentication information sent by the terminal bundled with a second account, a first account corresponding to the fund authentication information, and to acquire a specified amount of funds from the funds of the first account.

In a typical configuration, the computation device includes one or more processors (CPUs), input/output interfaces, network interfaces, and a memory.

The memory may include computer readable media, such as a volatile memory, a Random Access Memory (RAM), and/or a non-volatile memory, e.g., a Read-Only Memory (ROM) or a flash RAM. The memory is an example of a computer readable medium.

Computer readable media include permanent, volatile, mobile and immobile media, which can implement information storage through any method or technology. The information may be computer readable instructions, data structures, program modules or other data. Examples of storage media of computers include, but are not limited to, Phase-change RAMs (PRAMs), Static RAMs (SRAMs), Dynamic RAMs (DRAMs), other types of Random Access Memories (RAMs), Read-Only Memories (ROMs), Electrically Erasable Programmable Read-Only Memories (EEPROMs), flash memories or other memory technologies, Compact Disk Read-Only Memories (CD-ROMs), Digital Versatile Discs (DVDs) or other optical memories, cassettes, cassette and disk memories or other magnetic memory devices or any other non-transmission media, which can be used for storing information accessible to a computation device. According to the definitions herein, the computer readable media do not include transitory media, such as modulated data signals and carriers.

It should be further noted that the terms of "including," "comprising," or any other variants thereof intend to encompass a non-exclusive inclusion, such that a process, method, commodity or device comprising a series of elements not only comprises these elements, but also comprises other elements that are not clearly listed, or further comprises elements that are inherent to the process, method, commodity or device. When there is no further restriction, elements defined by the statement "comprising one..." does not exclude additional similar elements in a process, method, commodity, or device that comprises the defined elements.

A person skilled in the art should understand that the embodiments of the present application may be provided as a method, a system, or a computer program product. Therefore, the present application may be implemented as a complete hardware embodiment, a complete software embodiment, or an embodiment combining software and hardware. Moreover, the present application may be implemented in the form of a computer program product implemented on one or more computer usable storage media (including, but not limited to, a magnetic disk memory, CD-ROM, an optical memory, and the like) comprising computer usable program codes therein.

The embodiments of the present application described above are merely exemplary and are not used to limit the present application. To a person skilled in the art, the present application may be modified or changed in various ways. Any modification, equivalent substitution or improvement made within the spirit and principle of the present application shall fall within the scope of the claims of the present application.

## Claims

1. A resource processing method, comprising:
receiving authentication information and business resource quantity information sent by a terminal, wherein the authentication information has an association relationship with a first account and the terminal is bundled with a second account;
determining, according to the pre-established association relationship between the authentication information and the first account, the first account corresponding to the authentication information; and
acquiring, according to the business resource quantity information and from business resources of the first account, business resources corresponding to the business resource quantity information and forwarding the acquired business resources to the second account.

2. The method according to claim 1, wherein the pre-establishing the association relationship between the authentication information and the first account comprises:
receiving a request for generating the authentication information sent by a first account; and
generating unique authentication information according to the received request for generating the authentication information and establishing the association relationship between the generated authentication information and the first account.

3. The method according to claim 2, further comprising:
starting timing when generating the authentication information; and
when a timed length reaches a preset length, dissolving the association relationship between the authentication information and the first account.

4. The method according to claim 1, wherein the acquiring, according to the business resource quantity information and from business resources of the first account, business resources corresponding to the business resource quantity information comprises:
determining whether a quantity of the business resources corresponding to the business resource quantity information exceeds a quantity of the business resources of the first account;
if yes, determining extra resources corresponding to the first account, and acquiring the business resources corresponding to the business resource quantity information from the extra resources, or acquiring the business resources corresponding to the business resource quantity information from the business resources of the first account and the determined extra resources; and
otherwise, acquiring the business resources corresponding to the business resource quantity information from the business resources of the first account.

5. The method according to claim 4, wherein the determining extra resources corresponding to the first account comprises:
determining an account level of the first account; and
determining the extra resources corresponding to the first account according to preset correspondence relationships between account levels and extra resources.

6. The method according to claim 1, wherein prior to the forwarding to the second account, the method further comprises:
receiving a confirmation instruction sent by the first account.

7. A resource processing method, comprising:
sending, by a terminal, authentication information and business resource quantity information to a server, to cause the server to determine, according to a pre-established association relationship between the authentication information and a first account, the first account corresponding to the authentication information; and
receiving, by the terminal through a bundled second account, business resources sent by the server and corresponding to the business resource quantity information, wherein the business resources are acquired by the server from business resources of the first account according to the business resource quantity information.

8. A resource processing method, comprising:
receiving, by a terminal, a request for generating authentication information; and
sending the request for generating authentication information to a server, to cause the server to generate unique authentication information according to the request for generating authentication information, and establish an association relationship between the authentication information and a first account, wherein the association relationship between the authentication information and the first account is used to cause the server to determine, according to authentication information sent by the terminal bundled with a second account, the first account corresponding to the authentication information, and to acquire a specified quantity of business resources from business resources of the determined first account.

9. The method according to claim 8, further comprising:
receiving, by the terminal, a confirmation request sent by the server; and
generating a confirmation instruction according to an operation by a user for the confirmation request, and returning the confirmation instruction to the server, to cause the server to forward the acquired business resources to the second account according to the confirmation instruction.

10. A resource processing method, comprising:
receiving fund authentication information and amount information sent by a terminal, wherein the fund authentication information has an association relationship with a first account and the terminal is bundled with a second account;
determining, according to the pre-established association relationship between the fund authentication information and the first account, the first account corresponding to the fund authentication information; and
acquiring, according to the amount information and from the funds of the first account, funds corresponding to the amount information and forwarding the acquired funds to the second account.

11. A resource processing method, comprising:
receiving fund authentication information and amount information sent by a terminal, wherein the fund authentication information has an association relationship with a first account and the terminal is bundled with a second account;
determining, according to the pre-established association relationship between the fund authentication information and the first account, the first account corresponding to the fund authentication information;
determining whether the fund amount corresponding to the amount information exceeds the fund amount of the first account;
if yes, determining credit funds corresponding to the first account, acquiring funds corresponding to the amount information from the credit funds, and forwarding the acquired funds to the second account, or acquiring funds corresponding to the amount information from the funds of the first account and the determined credit funds of the first account, and forwarding the acquired funds to the second account; and
otherwise, acquiring funds corresponding to the amount information from the funds of the first account, and forwarding the acquired funds to the second account.

12. A resource processing method, comprising:
sending, by a terminal, fund authentication information and amount information to a server, to cause the server to determine, according to a pre-established association relationship between the fund authentication information and a first account, the first account corresponding to the fund authentication information; and
receiving, by the terminal through a bundled second account, funds sent by the server and corresponding to the amount information, wherein the funds are acquired by the server from the funds of the first account according to the amount information.

13. A resource processing method, comprising:
receiving, by a terminal, a request for generating fund authentication information; and
sending the request for generating fund authentication information to a server, to cause the server to generate unique fund authentication information according to the request for generating fund authentication information, and establish an association relationship between the fund authentication information and the first account, wherein the association relationship between the fund authentication information and the first account is used to cause the server to determine, according to the fund authentication information sent by the terminal bundled with a second account, the first account corresponding to the fund authentication information, and to acquire a specified amount of funds from the funds of the first account.

14. A resource processing apparatus, comprising:
a receiving module configured to receive authentication information and business resource quantity information sent by a terminal, wherein the authentication information has an association relationship with a first account and the terminal is bundled with a second account;
a determining module configured to determine, according to the pre-established association relationship between the authentication information and the first account, the first account corresponding to the authentication information; and
a processing module configured to acquire, according to the business resource quantity information and from business resources of the first account, business resources corresponding to the business resource quantity information, and to forward the acquired business resources to the second account.

15. The apparatus according to claim 14, wherein the determining module is configured to receive a request for generating the authentication information sent by the first account, generate unique authentication information according to the received request for generating the authentication information, and establish the association relationship between the generated authentication information and the first account.

16. The apparatus according to claim 15, wherein the apparatus further comprises a validity timing module configured to start timing when generating the authentication information, and when a timed length reaches a preset length, dissolve the association relationship between the authentication information and the first account.

17. The apparatus according to claim 14, wherein the processing module is configured to
determine whether a quantity of the business resources corresponding to the business resource quantity information exceeds a quantity of the business resources of the first account;
if yes, determine extra resources corresponding to the first account, and acquire the business resources corresponding to the business resource quantity information from the extra resources, or acquire the business resources corresponding to the business resource quantity information from the business resources of the first account and the determined extra resources; and
otherwise, acquire the business resources corresponding to the business resource quantity information from the business resources of the first account.

18. The apparatus according to claim 17, wherein the processing module is configured to determine an account level of the first account, and determine the extra resources corresponding to the first account according to preset correspondence relationships between account levels and extra resources.

19. The apparatus according to claim 14, wherein prior to the forwarding to the second account, the receiving module is further configured to receive a confirmation instruction sent by the first account.

20. A resource processing apparatus, comprising:
a sending module configured to send authentication information and business resource quantity information to a server, to cause the server to determine, according to a pre-established association relationship between the authentication information a first account, the first account corresponding to the authentication information; and
a receiving module configured to receive, through a second account bundled with the terminal, business resources sent by the server and corresponding to the business resource quantity information, wherein the business resources are acquired by the server from business resources of the first account according to the business resource quantity information.

21. A resource processing apparatus, comprising:
a receiving module configured to receive a request for generating authentication information; and
a sending module configured to send the request for generating authentication information to a server, to cause the server to generate unique authentication information according to the request for generating authentication information, and establish an association relationship between the authentication information and a first account, wherein the association relationship between the authentication information and the first account is used to cause the server to determine, according to authentication information sent by the terminal bundled with a second account, the first account corresponding to the authentication information, and to acquire a specified quantity of business resources from business resources of the determined first account.

22. The apparatus according to claim 21, wherein the apparatus further comprises a confirmation instruction module configured to receive a confirmation request sent by the server, and generate a confirmation instruction according to an operation by a user for the confirmation request, and return the confirmation instruction to the server, to cause the server to forward the acquired business resources to the second account according to the confirmation instruction.

23. A resource processing apparatus, comprising:
a receiving module configured to receive fund authentication information and amount information sent by a terminal, wherein the fund authentication information has an association relationship with a first account and the terminal is bundled with a second account;
a determining module configured to determine, according to the pre-established association relationship between the fund authentication information and the first account, the first account corresponding to the fund authentication information; and
a processing module configured to acquire, according to the amount information and from the funds of the first account, funds corresponding to the amount information, and to forward the acquired funds to the second account.

24. A resource processing apparatus, comprising:
a receiving module configured to receive fund authentication information and amount information sent by a terminal, wherein the fund authentication information has an association relationship with a first account and the terminal is bundled with a second account;
a determining module configured to determine, according to the pre-established association relationship between the fund authentication information and the first account, the first account corresponding to the fund authentication information; and
a processing module configured to determine whether the fund amount corresponding to the amount information exceeds the fund amount of the first account; if yes, determine credit funds corresponding to the first account, acquire funds corresponding to the amount information from the credit funds, and forward the acquired funds to the second account, or acquire funds corresponding to the amount information from the funds of the first account and the determined credit funds of the first account, and forward the acquired funds to the second account; otherwise, acquire funds corresponding to the amount information from the funds of the first account, and forward the acquired funds to the second account.

25. A resource processing apparatus, comprising:
a sending module configured to send fund authentication information and amount information to a server, to cause the server to determine, according to a pre-established association relationship between the fund authentication information and a first account, the first account corresponding to the fund authentication information; and
a receiving module configured to receive, through a second account bundled with the terminal, funds sent by the server and corresponding to the amount information, wherein the funds are acquired by the server from the funds of the first account according to the amount information.

26. A resource processing apparatus, comprising:
a receiving module configured to receive a request for generating fund authentication information; and
a sending module configured to send the request for generating fund authentication information to a server, to cause the server to generate unique fund authentication information according to the request for generating fund authentication information, and establish an association relationship between the fund authentication information and the first account, wherein the association relationship between the fund authentication information and the first account is used to cause the server to determine, according to the fund authentication information sent by the terminal bundled with a second account, the first account corresponding to the fund authentication information, and to acquire a specified amount of funds from the funds of the first account.
